# EUROPÄISCHE PATENTSCHRIFT

(11) **EP 0 847 791 B1**
(45) Veröffentlichungstag und Bekanntmachung des Hinweises auf die Patenterteilung: **17.03.2004**
(21) Anmeldenummer: 97119613.4
(22) Anmeldetag: 10.11.1997
(51) Int. Cl.: B01D 53/047, B01D 53/053

(54) **Verfahren zum Betrieb einer Druckwechselanlage zur Gewinnung von Sauerstoff aus der Luft**
Process to operate a pressure swing adsorption plant to seperate oxygen from the air
Procéde d'adsorption à variation de pression pour l'extraction de l'oxygene de 'lair

(30) Priorität: 11.12.1996 DE 19651457; 18.06.1997 DE 19725678
(43) Veröffentlichungstag der Anmeldung: 17.06.1998
(73) Patentinhaber: SGI-PROZESS-TECHNIK GmbH, 63674 Altenstadt (DE)
(72) Erfinder: Amlinger, Heinrich, 61194 Niddatal (DE)
(74) Vertreter: Hebing, Norbert

(56) Entgegenhaltungen:
- EP-A- 0 082 948
- EP-A- 0 447 029
- WO-A-93/10882
- WO-A-97/26981
- US-A- 4 614 525
- US-A- 5 529 611
- Katalog "Vakuumtechnik" der Firma SIHI-HALBERG, Itzehoe (D) Teil Vakuumtechnik WPH 07/84 133.33201.53.01 W 3 XP002059743

## Beschreibung

Die Erfindung betrifft ein Verfahren zum Betrieb einer Druckwechselanlage zur Gewinnung von Sauerstoff aus der Luft, welche zwei Adsorber hat, die wechselnd zur Adsorption von Stickstoff mit einem Luftgebläse und zur Desorption mit einem zwei hintereinander geschaltete Vakuumpumpen aufweisenden Vakuumpumpstand verbunden werden.

Eine Druckwechselanlage der vorstehenden Art, welche jedoch der Gewinnung von Stickstoff aus der Luft dient, ist beispielsweise in der DE-A-31 46 189 beschrieben. Bei dem Vakuumpumpstand der bekannten Druckwechselanlage ist zwischen den beiden Vakuumpumpen ein als Wärmetauscher ausgebildeter und deshalb im Gegensatz zu einer allgemein angewandten Kühlung durch Wassereinspritzen trocken arbeitender Zwischenkühler angeordnet, welcher die von der ersten Vakuumpumpe komprimierte Luft so weit abkühlt, dass es bei der zweiten Vakuumpumpe nicht zu einer Überhitzung kommt. Die zweite Vakuumpumpe ist mit einer Voreinlasskühlung versehen. Die Druckwechselanlage nach dieser Schrift arbeitet mit Adsorptionsdrücken zwischen 1 bar und 2,5 bar und Desorptionsdrücken vom 85 mbar.

Bei Druckwechselanlagen zur Sauerstoffgewinnung kommt es oftmals zu einem Teillastbetrieb, weil vorübergehend nur eine verringerte Sauerstoffmenge benötigt wird. Um hierbei Energie zu sparen, ist es üblich, während der Totzeiten den Vakuumpumpstand im Bypass zu fahren. Hierzu sind eine verhältnismäßig aufwendige Bypassverrohrung, Bypassventile und entsprechende Steuerungsmittel erforderlich, was beträchtlichen Aufwand bedingt.

Der Erfindung liegt das Problem zugrunde, ein Verfahren der eingangs genannten Art so auszubilden, dass mit möglichst geringem baulichen Aufwand bei Teillastbetrieb ein energiesparendes Arbeiten möglich wird.

Dieses Problem wird erfindungsgemäß dadurch gelöst, dass im durch eine geringe O₂-Entnahme gekennzeichneten Teillastbetrieb und während des unteren Druckausgleichs der Adsorber der Vakuumpumpstand mit dem Luftgebläse verbunden wird, indem jeweils ein einen Adsorber mit dem vakuumpumpstand verbindendes Vakuumventil und das denselben Adsorber mit dem Luftgebläse verbindende Luftventil gleichzeitig geöffnet werden.

Hierdurch besteht mit sehr geringem Rohrleitungs- und Ventilaufwand die Möglichkeit, im Teillastbetrieb und während des unteren Druckausgleiches die Druckdifferenz des Vakuumpumpstandes auf etwa < 200 mbar zu vermindern, so dass ohne den Aufwand eines Bypasses für den Vakuumpumpstand bei Teillastbetrieb und beim unteren Druckausgleich mit entsprechend vermindertem Energiebedarf gefahren werden kann.

Eine vorteilhafte Weiterbildung des erfindungsgemäßen Verfahrens besteht darin, dass man bei Teillastbetrieb den Adsorptionsdruck über den Adsorptionsdruck bei Volllastbetrieb ansteigen lässt und bei Erreichen eines festgelegten oberen Adsorptionsdruckes das Luftgebläse für die Adsorptionsluft vor den zweistufigen Vakuumpumpstand schaltet. Durch diese Verfahrensweise ergibt sich mit geringem baulichen Aufwand die Möglichkeit, im Teillastbetrieb besonders wirtschaftlich zu fahren.

Die Teillast-Betriebsweise kann mit besonders geringem Aufwand beendet werden, wenn der Druck am Speicherbehälter oder Pufferbehälter überwacht und bei Unterschreiten eines festgelegten Wertes die Luftventile und Vakuumventile wieder auf zyklischen Adsorptions- und Desorptionsbetrieb geschaltet werden. Der gemessene Druckabfall gibt darüber Aufschluss, dass wieder vermehrt Sauerstoff entnommen wird.

Besonders vorteilhaft ist es, wenn der untere Druckausgleich gleichzeitig mit dem oberen Druckausgleich vorgenommen wird. Durch diese Verfahrensweise wird aus dem jeweiligen Adsorber Stickstoff nach unten hin abgesaugt. Durch den Druckausgleich strömt in den regenerierten Adsorber nicht der Stickstoff aus dem ersten Adsorber, sondern überwiegend Luft.

Durch Versuche konnte ermittelt werden, dass der Energiebedarf besonders günstig ist, wenn gemäß einer anderen Weiterbildung des Verfahrens ein Adsorptionsdruck zwischen 0,7 bar und 1,8 bar, vorzugsweise zwischen 0,9 bar am Anfang und 1,5 bar am Ende der Adsorption und ein Desorptionsdruck zwischen 350 mbar und 400 mbar gewählt wird und wenn der Startdruck für die Adsorption und Desorption nach der Spülphase und der Druckaufbauphase minimal 700 mbar und maximal 950 mbar beträgt.

Um nach dem Umschalten auf Druckaufbau in dem jeweiligen Adsorber den Druckaufbau auf Adsorptionsdruck in der gewünschten Zeit erreichen zu können, wird gemäß einer Weiterbildung des Verfahrens mittels einer Drossel in der Produktentnahmeleitung nach dem Pufferbehälter der Druck gedrosselt.

Günstig für den Betrieb der Druckwechselanlage ist es auch, wenn der Drossel ein Pufferbehälter nachgeschaltet und sein Volumen so bemessen wird, dass der Druck im Pufferbehälter zwischen 1,2 bar und 1,5 bar innerhalb eines Adsorptionszyklusses schwankt.

Das Luftgebläse für die Adsorptionsluft und der Vakuumpumpstand werden durch einen zwangsweise geführten Luftstrom gekühlt, ohne dass bei niedrigen Außentemperaturen die Gefahr einer zu geringen Lufteingangstemperatur in dem Adsorber besteht, wenn zur Kühlung der Anlageteile ein Gebläse eines für die Adsorptionsluft notwendigen Luftkühlers benutzt wird, wenn ein Kühlluftstrom entlang des Vakuumpumpstandes und des Pumpstandes für die Adsorptionsluft zu dem Gebläse geführt wird und wenn das Gebläse mittels eines frequenzgeregelten Ventilatormotors so geregelt wird, dass die Lufteintrittstemperatur in den Adsorber nicht unter einen unteren Wert absinkt. In der Praxis hat sich gezeigt, dass sich die O₂-Konzentration erheblich verringert, wenn die Adsorptionstemperaturen unter 20°C sinken. Durch die erfindungsgemäße Verfahrensweise kann man durch Verringern der Menge des Kühlluftstromes sich sinkenden Außentemperaturen anpassen.

Ist die Außentemperatur so niedrig, dass die Verringerung der Drehzahl des Gebläses für den Kühlluftstrom nicht ausreicht, um Adsorptionstemperaturen über 20°C zu erhalten, kann man gemäß einer Weiterbildung der Erfindung bei niedrigen Außentemperaturen die heiße Abluft des Vakuumpumpstandes zur Anhebung der Temperatur der Luft des Luftgebläses benutzen. Dabei wird vor dem Luftgebläse eine Drosselklappe so geschaltet, dass ein Teilstrom kalte Luft aus dem den Vakuumpumpstand enthaltenden Container und ein weiterer, durch die Vakuumabluft über einen Wärmetauscher vorgewärmter Teilstrom unmittelbar am Abluftaustritt angesaugt wird. Dadurch wird das Temperaturniveau nach dem Luftgebläse entsprechend angehoben, so dass über die Drehzahlregelung des Gebläsemotors für den Kühlluftstrom die 20°C Adsorptionstemperatur gehalten werden kann. Diese Vorwärmung ist möglich, weil die zweite Vakuumpumpe gemäß der Erfindung ohne Wassereinspritzung und damit bei höheren Temperaturen arbeitet als nach dem Stand der Technik.

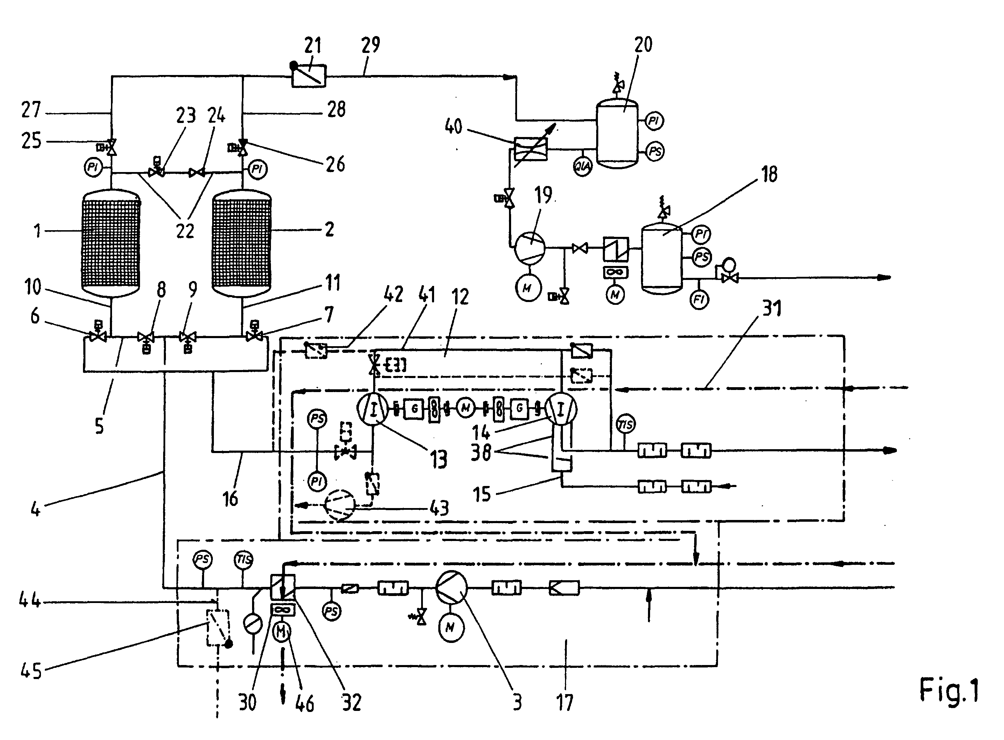

Zur weiteren Verdeutlichung der Erfindung wird nachfolgend auf die Zeichnung Bezug genommen. Diese zeigt einen Schaltplan einer PVSA-Anlage (Pressure-Vakuum-Swing-Adsorptions-Anlage), welche mit synthetischem Zeolith in zwei parallel geschalteten Adsorbern 1, 2 arbeitet. Diesen wird mittels eines als Drehkolbenpumpe ausgebildeten Luftgebläses 3 eines Pumpstandes 17 wechselweise Luft zugeführt. Außerdem dient das Luftgebläse 3 dazu, den erforderlichen Adsorptionsdruck zu erzeugen und aufrechtzuerhalten. Hierzu verbindet eine Leitung 4 das Luftgebläse 3 mit einer Verteilerleitung 5, in welche außen zwei Vakuumventile 6, 7 und innen zwei Luftventile 8, 9 geschaltet sind. Die Leitung 4 mündet zwischen den Luftventilen 8, 9 in die Verteilerleitung 5, während jeweils zwischen einem Vakuumventil 6, 7 und einem Luftventil 8, 9 eine Leitung 10, 11 zu dem Adsorber 1 bzw. 2 führt.

Zur wechselseitigen Evakuierung der Adsorber 1, 2 und damit zum Ansaugen der stickstoffangereicherten Fraktion aus den Adsorbern 1, 2 dient ein Vakuumpumpstand 12, der hintereinander zwei Vakuumpumpen 13, 14 aufweist. Bei der Vakuumpumpe 14, die die zweite Pumpstufe bildet und auf der Seite der Atmosphäre angeordnet ist, handelt es sich um eine voreinlassgekühlte Drehkolbenpumpe. In diese zweite Vakuumpumpe 14 strömt Luft aus der Atmosphäre als Kühlluft über eine Leitung 15 hinein.

Der Vakuumpumpstand 12 ist mittels einer Ansaugleitung 16 mit den beiden äußeren Enden der Verteilerleitung 5 verbunden. Die Vakuumventile 6, 7 und Luftventile 8, 9 ermöglichen es, im Teillastbetrieb die Ansaugseite der ersten Vakuumpumpe 13 des Vakuumpumpstandes 12 mit Druckluft vom Luftgebläse 3 zu beaufschlagen.

Die Sauerstoffentnahme erfolgt hinter einem Speicherbehälter 18, dem ein Gebläse 19 oder Kompressor vorgeschaltet ist, so dass der Sauerstoff mit Überdruck anfällt. Dem Gebläse 19 oder Kompressor vorgeschaltet ist ein Pufferbehälter 20, in den der Sauerstoff, welcher eine Reinheit von bis zu 95 % hat, über eine Sperreinrichtung 21 gelangt. Bei der Sperreinrichtung 21 handelt es sich um eine von den Adsorbern 1, 2 zum Speicherbehälter 18 hin öffnende Rückschlagklappe.

Die Auslässe der beiden Adsorber 1, 2 sind durch eine Verbindungsleitung 22 miteinander verbunden, in welche ein Sperrventil 23 und eine Drossel 24 geschaltet sind. Mit Hilfe dieser Verbindungsleitung 22, dem Sperrventil 23 und der Drossel 24 werden die beiden Adsorber 1 und 2 zum Spülen und zum ersten Druckaufbau nach jeder Desorptionsphase bzw. Adsorptionsphase für den Spülvorgang miteinander verbunden und der auf einen Enddruck von 350 mbar regenerierte Adsorber 1 oder 2 von dem noch in Adsorption befindlichen Adsorber 2 oder 1 bei zugeschaltetem Luftgebläse 3 und Vakuumpumpstand 12 gespült und dabei ein erster Druckaufbau des regenerierten Adsorbers auf ca. 500 mbar erzielt. Nach diesem Spülvorgang werden Produktentnahmeventile 25, 26 in Leitungen 27, 28, welche zu einer Produktentnahmeleitung 29 mit der Sperreinrichtung 21 führen, aufgeschaltet. Durch gleichzeitiges Öffnen des dem jeweiligen Adsorber 1 oder 2 zugeordneten Luftventils 8 oder 9 wird dieser dann mit dem Luftgebläse 3 als auch mit dem Pumpstand 12 verbunden, so dass in dem regenerierten Adsorber 1 oder 2 ein erneuter Druckaufbau bzw. ein Druckausgleich in beiden Adsorbern 1 und 2 oben und unten erfolgen kann. Der untere Druckausgleich funktioniert genau so wie der Teillastbetrieb, nur dass diese Funktion zeitlich sehr kurz ist und sich zyklisch immer wiederholt. Wenn zum Beispiel der Adsorber 1 regeneriert und der Adsorber 2 adsorbiert, dann sind die unteren Ventile folgendermaßen geschaltet: Ventil 6 offen, Ventil 8 zu, Ventil 9 offen und Ventil 7 zu. Beim unteren Druckausgleich wird innerhalb der Druckausgleichszeit innerhalb einer gewissen Zeit zusätzlich das Ventil 8 geöffnet. Danach wird das Ventil 7 geöffnet und Ventil 6 geschlossen und nach Ablauf der Druckausgleichszeit Ventil 9 geschlossen. Dadurch wird gewährleistet, dass während des unteren Druckausgleichs genau wie bei Teillastbetrieb immer eine Verbindung des Vakuumpumpstandes 12 zum Luftgebläse 3 besteht. Von Vorteil ist dabei, dass innerhalb der Druckausgleichszeit die Ventile in die richtige Position für die nachfolgende Adsorption und Desorption gebracht werden, so dass die Zeiten, innerhalb der keine Produktion erfolgt, besonders gering sind.

Durch die beschriebene Art des Druckausgleichs erfolgt der untere Druckausgleich gleichzeitig mit dem oberen Druckausgleich. Dadurch wird aus dem jeweiligen Adsorber Stickstoff nach unten hin abgesaugt. Durch den Druckausgleich strömt in den regenerierten Adsorber nicht der Stickstoff aus dem ersten Adsorber, sondern überwiegend Luft.

Nach Ablauf des Druckaufbaus von 500 mbar auf 900 mbar wird so das entsprechende Vakuumventil 7 bzw. 6 des regenerierten Adsorbers 1 oder 2 geschlossen und für den zu regenerierenden Adsorber 1 oder 2 gleichzeitig das entsprechende Produktentnahmeventil 25 bzw. 26 geschlossen, so dass die Adsorptionsphase im regenerierten Adsorber 1 oder 2 bzw. die Desorptionsphase im zuvor in Adsorption befindlichen Adsorber 1 oder 2 erfolgt.

Beim Pumpstand 17 mit dem Luftgebläse 3 wurde lediglich ein mit Luft als Kühlmittel arbeitender Luftkühler 32 positioniert, dem ein Gebläse 30 zugeordnet ist, durch welches ein Kühlluftstrom 31 zunächst an einer Seite des Vakuumpumpstandes 12, dann an seiner anderen Seite zurück und anschließend entlang des Pumpstandes 17 für die Adsorptionsluft durch den Luftkühler 32 gesaugt wird. Nicht positioniert wurden die üblichen Bauteile, wie Filter, Schalldämpfer, ein Sicherheitsventil und Ventile. Der Luftkühler 32 dient dazu, die von dem als Drehkolbengebläse ausgebildeten Luftgebläse 3 auf maximal 1,5 bar verdichtete Luft zurückzukühlen. Die Einstellung dieses Druckes erfolgt durch die Produktentnahmemenge und die Drossel 40 hinter dem Pufferbehälter 20, so dass in dem jeweils auf Adsorption geschalteten Adsorber 1 oder 2 der gewünschte maximale Druck nach jeder Adsorptionsphase erreicht wird. Die Regelung der Adsorptionstemperatur erfolgt durch Drehzahlregelung des Gebläses 30 mittels eines frequenzgesteuerten Ventilatormotors 46.

Auch beim Vakuumpumpstand 12 wurden übliche Bauteile nicht positioniert. Die von der ersten Vakuumpumpe 13 kommende, komprimierte, heiße und sauerstoffabgereicherte Luft von 50°C bis maximal 110°C wird pro Zyklus direkt der zweiten Vakuumpumpe 14 zugeführt und von der zweiten Vakuumpumpe 14 mit dieser Temperatur angesaugt.

In der Zeichnung ist desweiteren eine Bypassleitung 41 dargestellt, über welche die zweite Vakuumpumpe 14 unter Umgehung der ersten Vakuumpumpe 13 unmittelbar mit den Adsorbern 1 und 2 verbindbar ist. In diese Bypassleitung 41 ist eine Rückschlagklappe 42 geschaltet, welche zur zweiten Vakuumpumpe 14 hin öffnet. Zum Evakuieren der ersten Vakuumpumpe 13 kann eine Hilfspumpe 43 vorgesehen sein.

Um den Vakuumpumpstand 12 einlassseitig auch bei Stillstand des Luftgebläses mit der Atmosphäre zu verbinden, mündet in die Leitung 4 eine Lufteinlassleitung 44 mit einer zur Atmosphäre hin schließenden Rückschlagklappe 45.

Wie die Zeichnung erkennen lässt, verzweigt sich die Leitung 15 zu einem Hosenrohr 38, um beide Kühllufteintrittsöffnungen 33, 34 mit der Atmosphäre zu verbinden. Dadurch kommt es in der Leitung 15 zu Pulsationen doppelter Grundfrequenz, so dass einfache Pulsationsdämpfer genügen.

Die beschriebene Druckwechselanlage arbeitet vorzugsweise mit einer Gesamtzykluszeit von 2 x 33 bis 2 x 45 sec. Dabei entfallen auf die Spül- und Druckausgleichsphase 7 bis maximal 15 sec. Diese Spül- und Druckausgleichsphase wird vorgenommen, wenn die wechselweise erfolgende Umschaltung von Absorption auf Desorption in dem einen Adsorber 1 oder 2 bzw. von Desorption auf Adsorption in dem anderen Adsorber 1 oder 2 erfolgt.

Abschließend sei angemerkt, dass es sich bei allen Druckangaben um absolute Drücke handelt.

### Bezugszeichenliste

- 1: Adsorber
- 2: Adsorber
- 3: Luftgebläse
- 4: Leitung
- 5: Verteilerleitung

- 6: Vakuumventil
- 7: Vakuumventil
- 8: Luftventil
- 9: Luftventil
- 10: Leitung

- 11: Leitung
- 12: Vakuumpumpstand
- 13: Vakuumpumpe
- 14: Vakuumpumpe
- 15: Leitung

- 16: Ansaugleitung
- 17: Pumpstand
- 18: Speicherbehälter
- 19: Gebläse
- 20: Pufferbehälter

- 21: Sperreinrichtung
- 22: Verbindungsleitung
- 23: Sperrventil
- 24: Drossel
- 25: Produktentnahmeventil

- 26: Produktentnahmeventil
- 27: Leitung
- 28: Leitung
- 29: Produktentnahmeleitung
- 30: Gebläse

- 31: Kühlluftstrom
- 32: Luftkühler
- 33: Kühllufteintrittsöffnung
- 34: Kühllufteintrittsöffnung

- 38: Hosenrohr

- 40: Drossel

- 41: Bypassleitung
- 42: Rückschlagklappe
- 43: Hilfspumpe
- 44: Lufteinlassleitung
- 45: Rückschlagklappe

- 46: Ventilatormotor

## Patentansprüche

1. Verfahren zum Betrieb einer Druckwechselanlage zur Gewinnung von Sauerstoff aus der Luft, welche zwei Adsorber hat, die wechselnd zur Adsorption von Stickstoff mit einem Luftgebläse und zur Desorption mit einem zwei hintereinander geschaltete Vakuumpumpen aufweisenden Vakuumpumpstand verbunden werden, **dadurch gekennzeichnet, dass** im durch eine geringe O₂-Entnahme gekennzeichneten Teillastbetrieb und während des unteren Druckausgleichs der Adsorber der Vakuumpumpstand mit dem Luftgebläse verbunden wird, indem jeweils ein einen Adsorber mit dem Vakuumpumpstand verbindendes Vakuumventil und das denselben Adsorber mit dem Luftgebläse verbindende Luftventil gleichzeitig geöffnet werden.

2. Verfahren nach Anspruch 1, **dadurch gekennzeichnet, dass** man bei Teillastbetrieb den Adsorptionsdruck über den Adsorptionsdruck bei Volllastbetrieb ansteigen lässt und bei Erreichen eines festgelegten oberen Adsorptionsdruckes das Luftgebläse für die Adsorptionsluft vor den zweistufigen Vakuumpumpstand schaltet.

3. Verfahren nach den Ansprüchen 1 oder 2, **dadurch gekennzeichnet, dass** der Druck am Speicherbehälter oder Pufferbehälter überwacht und bei Unterschreiten eines festgelegten Wertes die Luftventile und Vakuumventile wieder auf zyklischen Adsorptions- und Desorptionsbetrieb geschaltet werden.

4. Verfahren nach zumindest einem der vorangehenden Ansprüche, **dadurch gekennzeichnet, dass** der untere Druckausgleich gleichzeitig mit dem oberen Druckausgleich vorgenommen wird.

5. Verfahren nach zumindest einem der vorangehenden Ansprüche, **dadurch gekennzeichnet, dass** ein Adsorptionsdruck zwischen 0,7 bar und 1,8 bar, vorzugsweise zwischen 0,9 bar am Anfang und 1,5 bar am Ende der Adsorption, und ein Desorptionsdruck zwischen 350 mbar und 400 mbar gewählt wird und dass der Startdruck für die Adsorption und Desorption nach der Spülphase und der Druckaufbauphase minimal 700 mbar und maximal 950 mbar beträgt.

6. Verfahren nach zumindest einem der vorangehenden Ansprüche, **dadurch gekennzeichnet, dass** mittels einer Drossel in der Produktentnahmeleitung nach dem Pufferbehälter der Druckaufbau auf Adsorptionsenddruck in einer gewünschten Zeit nach dem Umschalten eines Adsorbers auf Druckaufbau ermöglicht wird.

7. Verfahren nach zumindest einem der vorangehenden Ansprüche, **dadurch gekennzeichnet, dass** der Drossel ein Pufferbehälter nachgeschaltet und sein Volumen so bemessen wird, dass der Adsorptionsdruck im Pufferbehälter zwischen 1,2 bar und 1,5 bar innerhalb eines Adsorptionszyklusses schwankt.

8. Verfahren nach zumindest einem der vorangehenden Ansprüche, **dadurch gekennzeichnet, dass** zur Kühlung der Anlageteile ein Gebläse eines für die Adsorptionsluft notwendigen Luftkühlers benutzt wird, dass ein Kühlluftstrom entlang des Vakuumpumpstandes und des Pumpstandes für die Adsorptionsluft zu dem Gebläse geführt wird und dass das Gebläse mittels eines frequenzgeregelten Ventilatormotors so geregelt wird, dass die Lufteintrittstemperatur in den Adsorber nicht unter einen unteren Wert absinkt.

9. Verfahren nach Anspruch 8, **dadurch gekennzeichnet, dass** bei niedrigen Außentemperaturen die heiße Abluft des Vakuumpumpstandes zur Anhebung der Temperatur der Luft des Luftgebläses benutzt wird.

## Claims

1. A method for operating a pressure swing adsorption plant for extracting oxygen from the air, wherein said plant contains two adsorbers that are alternately connected to an air blower for the adsorption of nitrogen and to a vacuum pump stand comprising two series connected vacuum pumps for the desorption, **characterized in that** the vacuum pump stand is connected to the air blower in a partial load mode that is **characterized by** a low O₂ extraction, as well as during the lower pressure compensation of the adsorbers, by simultaneously opening a vacuum valve that connects one adsorber to the vacuum pump stand and the air valve that connects the same adsorber to the air blower.

2. The method according to Claim 1, **characterized in that** the adsorption pressure during the partial load mode is permitted to increase above the adsorption pressure during the full load mode, and **in that** the air blower for the adsorption air is connected in series to the two-stage vacuum pump stand once a predetermined upper adsorption pressure is reached.

3. The method according to Claim 1 or 2, **characterized in that** the pressure of the storage reservoir or buffer tank is monitored, and **in that** the air valves and vacuum valves are switched back to the cyclic adsorption and desorption mode if said pressure does not reach a predetermined value.

4. The method according to at least one of the preceding claims, **characterized in that** the lower pressure compensation takes place simultaneously with the upper pressure compensation.

5. The method according to at least one of the preceding claims, **characterized in that** the adsorption pressure lies between 0.7 bar and 1.8 bar, preferably between 0.9 bar at the beginning and 1.5 bar at the end of the adsorption, **in that** the desorption pressure lies between 350 mbar and 400 mbar, and **in that** the starting pressure for the adsorption and desorption after the scavenging phase and the pressure build-up phase lies at no less than 700 mbar and no more than 950 mbar.

6. The method according to at least one of the preceding claims, **characterized in that** a throttle in the product withdrawal line downstream of the buffer tank makes it possible to build up the pressure to the adsorption pressure within a desired time after changing over one adsorber into the pressure build-up mode.

7. The method according to at least one of the preceding claims, **characterized in that** a buffer tank is arranged downstream of the throttle, wherein the volume of the buffer tank is chosen such that the adsorption pressure in the buffer tank fluctuates between 1.2 bar and 1.5 bar within one adsorption cycle.

8. The method according to at least one of the preceding claims, **characterized in that** the plant components are cooled with a blower of the air cooler required for the adsorption air, **in that** a stream of cooling air is conveyed along the vacuum pump stand and the pump stand for the adsorption air to the blower, and **in that** the blower is regulated by means of a frequency controlled fan motor in such a way that the air inlet temperature into the adsorber does not drop below a lower value.

9. The method according to Claim 8, **characterized in that** the hot outgoing air of the vacuum pump stand is used for elevating the temperature of the air of the air blower at low outside temperatures.

## Revendications

1. Procédé pour faire fonctionner une installation à variation de pression pour extraire de l'oxygène de l'air, laquelle installation comporte deux dispositifs d'adsorption qui sont reliés en alternance à une soufflerie d'air pour l'adsorption d'oxygène et à un poste de pompes à vide comprenant deux pompes à vide branchées l'une derrière l'autre pour la désorption, **caractérisé en ce que**, pendant un fonctionnement en charge partielle **caractérisé par** une faible extraction O₂ et pendant la compensation inférieure de pression, le dispositif d'adsorption du poste de pompes à vide est relié à la soufflerie d'air du fait que, à chaque fois, une soupape à vide reliant un dispositif d'adsorption au poste de pompes à vide et la soupape d'air reliant le même dispositif d'adsorption à la soufflerie d'air sont ouvertes simultanément.

2. Procédé selon la revendication 1, **caractérisé en ce que**, en fonctionnement en charge partielle, on laisse monter la pression d'adsorption au-dessus de la pression d'adsorption en fonctionnement en charge totale et, lorsqu'une pression d'adsorption supérieure fixée est atteinte, on branche la soufflerie d'air pour l'air d'adsorption avant le poste de pompes à vide à deux étages.

3. Procédé selon les revendications 1 ou 2, **caractérisé en ce qu'**on surveille la pression au réservoir de stockage ou au réservoir intermédiaire et, lorsqu'on passe en dessous d'une valeur fixée, on branche à nouveau les soupapes d'air et les soupapes à vide sur un fonctionnement cyclique d'adsorption et de désorption.

4. Procédé selon au moins l'une des revendications précédentes, **caractérisé par le fait que** la compensation inférieure de pression est effectuée en même temps que la compensation supérieure de pression.

5. Procédé selon au moins l'une des revendications précédentes, **caractérisé en ce qu'**on choisit une pression d'adsorption entre 0,7 bar et 1,8 bar, de préférence entre 0,9 bar au début et 1,5 bar à la fin de l'adsorption, et une pression de désorption entre 350 mbar et 400 mbar et **en ce que** la pression de départ pour l'adsorption et la désorption après la phase de rinçage et après la phase d'établissement de pression vaut au minimum 700 mbar et au maximum 950 mbar.

6. Procédé selon au moins l'une des revendications précédentes, **caractérisé en ce que**, au moyen d'un dispositif d'étranglement dans la conduite d'extraction de produit après le réservoir intermédiaire, on permet la montée de pression jusqu'à la pression finale d'adsorption en un temps souhaité après la commutation d'un dispositif d'adsorption sur la montée de pression.

7. Procédé selon au moins l'une des revendications précédentes, **caractérisé en ce qu'**un réservoir intermédiaire est branché en aval du dispositif d'étranglement et son volume est dimensionné de telle sorte que la pression d'adsorption dans le réservoir intermédiaire varie entre 1,2 bar et 1,5 bar à l'intérieur d'un cycle d'adsorption.

8. Procédé selon au moins l'une des revendications précédentes, **caractérisé en ce que**, pour le refroidissement des parties de l'installation, on utilise un ventilateur d'un refroidisseur à air nécessaire à l'air d'adsorption, **en ce qu'**on guide un courant d'air de refroidissement le long du poste de pompes à vide et du poste de pompes pour l'air d'adsorption vers le ventilateur et **en ce qu'**on règle le ventilateur au moyen d'un moteur de ventilateur à régulation de fréquence de telle sorte que la température d'entrée d'air dans le dispositif d'adsorption ne diminue pas en dessous d'une valeur inférieure.

9. Procédé selon la revendication 8, **caractérisé en ce que**, en cas de températures extérieures basses, l'air sortant chaud du poste de pompes à vide est utilisé pour augmenter la température de l'air de la soufflerie d'air.
